(19) Europäisches Patentamt
European Patent Office
Office européen des brevets

(11) Veröffentlichungsnummer: 0 432 562 A1

(12) **EUROPÄISCHE PATENTANMELDUNG**

(21) Anmeldenummer: **90122584.7**

(22) Anmeldetag: **27.11.90**

(51) Int. Cl.$^5$ **C08G 73/06**, C08G 73/18, C08G 73/22

(30) Priorität: **09.12.89 DE 3940792**

(43) Veröffentlichungstag der Anmeldung: **19.06.91 Patentblatt 91/25**

(84) Benannte Vertragsstaaten: **DE FR GB IT**

(71) Anmelder: **BAYER AG**

**W-5090 Leverkusen 1 Bayerwerk(DE)**

(72) Erfinder: **Kricheldorf, Hans Rytger, Prof. Dr.**
**Menzelstrasse 10**
**W-32000 Hamburg 52(DE)**
Erfinder: **Engelhardt, Jürgen**
**Schulenburgring 142**
**W-2050 Hamburg 80(DE)**
Erfinder: **Pakull, Ralf, Dr.**
**Neue-Linner-Strasse 75**
**W-4150 Krefeld(DE)**
Erfinder: **Eckhardt, Volker, Dr.**
**Bodelschwinghstrasse 14**
**W-4150 Krefeld(DE)**
Erfinder: **Leyrer, Ulrich, Dr.**
**Johannes-Dott-Strasse 11**
**W-5090 Leverkusen(DE)**

(54) **Steifkettige Polyheterocyclen mit verbesserter Löslichkeit, Verfahren zu ihrer Herstellung und ihre Verwendung.**

(57) Die substituierten Polyheterocyclen mit wiederkehrenden Struktureinheiten der Formel

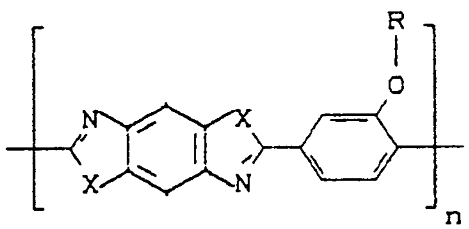

und/oder

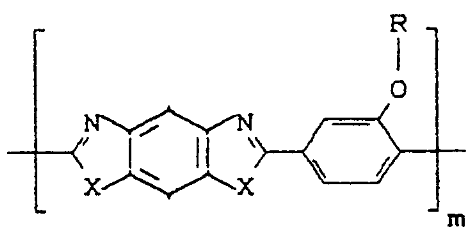

worin X für ein Sauerstoff-, ein Schwefelatom oder N-H steht, weisen gute Löslichkeit in Methansulfonsäure/Methylenchlorid bzw. Trifluoressigsäure/Methylenchlorid-Gemischen auf. Sie lassen sich zur Herstellung von Mischungen mit thermoplastischen Polymeren verwenden.

EP 0 432 562 A1

# STEIFKETTIGE POLYHETEROCYCLEN MIT VERBESSERTER LÖSLICHKEIT, VERFAHREN ZU IHRER HERSTELLUNG UND IHRE VERWENDUNG

Die Erfindung betrifft steifkettige substituierte Polyheterocyclen und deren Herstellung. Die erfindungsgemäßen substituierten Polyheterocyclen weisen eine gute Löslichkeit in T rifluoressigsäure/Methylenchlorid-Gemischen auf. Sie eignen sich daher vorteilhaft zur Herstellung von Mischungen mit thermoplastischen Polymeren.

Steifkettige methyl- bzw. dimethylsubstituierte Polyheterocyclen sind bekannt (z.B. Polym. Prep. Am. Chem. Soc., Div. Polym. Chem. 29 (1988) 2, 324-325). Die Löslichkeit dieser substituierten Polyheterocyclen ist auf starke Säuren wie konzentrierte Schwefelsäure beschränkt. Da sie bei Temperaturen unterhalb 400 °C nicht schmelzen, eignen sie sich nicht zur Herstellung von Mischungen mit thermoplastischen Polymeren.

Aufgabe der vorliegenden Erfindung war es daher, Polyheterocyclen mit verbesserter Löslichkeit bereitzustellen.

Es wurde nun gefunden, daß bestimmte steifkettige substituierte Polyheterocyclen sich in Methansulfonsäure/Methylenchlorid bzw. Trifluoressigsäure/Methylenchlorid-Gemischen auflösen lassen. Aufgrund ihrer Kettensteifigkeit eignen sie sich zur Herstellung von Mischungen mit thermoplastischen Polymeren. Die Herstellung von Mischungen aus Polyheterocyclen und thermoplastischen Polymeren wird damit erheblich vereinfacht.

Gegenstand der Erfindung sind daher substituierte Polyheterocyclen mit wiederkehrenden Einheiten der Formel (I) und/oder (II)

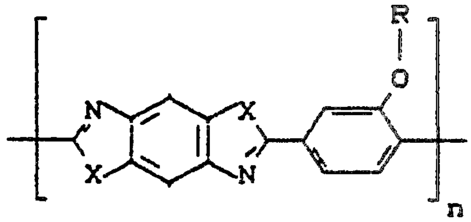

(I),

und/oder

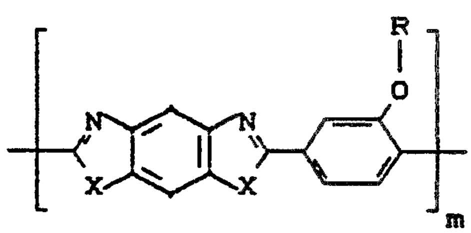

(II),

worin

R einen Arylrest mit 6 bis 18 C-Atomen, einen p-Alkylphenylrest mit 1 bis 15 aliphatischen C-Atomen, einen Phenylalkylenrest mit 6 bis 18 aromatischen C-Atomen und 1 bis 15 aliphatischen C-Atomen, einen p-Halogenphenylrest, einen $p$-$C_6$-$C_{10}$-Aryloxyphenylrest mit 12 bis 24 C-Atomen, einen Alkoxyphenylrest mit 7 bis 18 aliphatischen C-Atomen oder einen Indanylrest, der durch 1 bis 8 aliphatische Gruppen oder Halogenatome substituiert sein kann, wobei R an jedem Ring unabhängig gleich oder verschieden sein kann,

X für ein Sauerstoff-, ein Schwefelatom oder N-H steht,
und

n,m unabhängig voneinander eine ganze Zahl von 3 bis 1000 bedeuten.

Als Arylreste werden z.B. genannt solche mit 6 bis 18 C-Atomen wie Phenyl, Biphenyl, Terphenyl, Anthracenyl oder Naphthyl, bevorzugt Phenyl und Biphenyl, als p-Alkylphenylreste z.B. solche mit 1 bis 15 aliphatischen C-Atomen wie p-Methylphenyl, p-Ethylphenyl, p-tert.-Butylphenyl, p-tert.-Amylphenyl, p-Isooctylphenyl, bevorzugt p-tert.-Butylphenyl, P-tert.-Amylphenyl und p-Isooctylphenyl, als Phenylalkylenreste

z.B. solche mit 1 bis 15 aliphatischen C-Atomen und 6 bis 18 aromatischen C-Atomen wie Methylenphenyl und Isopropylidenphenyl, als p-Halogenphenylreste p-Fluorphenyl, p-Chlorphenyl, p-Bromphenyl, p-Chlorbiphenyl, bevorzugt p-Chlorphenyl und p-Bromphenyl, als p-Aryloxyphenylreste z.B. solche mit 12 bis 24 C-Atomen wie p-Phenoxyphenyl, p-Biphenyloxyphenyl, p-Naphthoxyphenyl, bevorzugt p-Phenoxyphenyl, als p-Alkoxyphenylreste z.B. solche mit 7 bis 18 aliphatischen C-Atomen wie p-Methoxyphenyl, p-Ethoxyphenyl, p-tert,-Butyloxyphenyl, bevorzugt p-Methoxyphenyl und p-tert.-Butyloxyphenyl und als Indanylreste z.B. solche mit bis zu 8 aliphatischen Substituenten oder solche, die mit bis zu 8 Halogenatomen substituiert sind wie Indan, 1,1,3,3-Tetramethylindan und 2,2,3,3-Tetramethylindan, bevorzugt 1,1,3,3-Tetramethylindan.

Als Halogen sei vorzugsweise Fl, Cl, Br genannt.

Die erfindungsgemäßen steifkettigen substituierten Polyheterocyclen können analog nach bekannten Verfahren in Polyphosphorsäure (vgl. z.B. J. Polym. Sci., 50, 511 (1961), US-A 313 783) oder durch Schmelzkondensation (vgl. z.B. US-A 3 174 947) hergestellt werden.

An die Schmelzkondensation z.B. kann sich gegebenenfalls eine Festphasennachkondensation anschließen (vgl. z.B. US-A 3 509 108).

Ebenso können die erfindungsgemäßen steifkettigen substituierten Polyheterocyclen aus z.B. silyliertem 2,5-Diaminohydrochinon oder silyliertem 2,4-Diaminoresorcin hergestellt werden (vgl. z.B. USSR-A 663 699).

Bevorzugtes Verfahren ist die Herstellung der erfindungsgemäßen steifkettigen substituierten Polyheterocyclen aus silyliertem 2,5-Diaminohydrochinon oder silyliertem 2,4-Diaminoresorcin.

Aufgrund ihrer Eigenschaften eignen sich die erfindungsgemäßen steifkettigen substituierten Polyheterocyclen besonders vorteilhaft zur Herstellung von Mischungen mit thermoplastischen Polymeren (Matrixpolymer) im Verhältnis 0,01 bis 0,6:0,99 bis 0,40, bevorzugt 0,05 bis 0,40: 0,95 bis 0,60, besonders bevorzugt 0,05 bis 0,20:0,45 bis 0,80. Ein weiterer Gegenstand der Erfindung sind daher Mischungen der erfindungsgemäßen steifkettigen substituierten Polyheterocyclen mit thermoplastischen Polymeren.

Als thermoplastische Polymere, die als Mischungspartner in Frage kommen seien beispielhaft genannt Polyacrylnitril oder ein Derivat/Copolymer davon, Polyamide wie Polyamid 6, 66 oder ein Derivat/Copolymer davon, Polyester wie Polyethylenterephthalat oder Polybutylenterephthalat oder ein Derivat/Copolymer davon, Polyurethane oder ein Derivat/Copolymer davon, Polyalkylene wie Polyethylen oder Polypropylen oder ein Derivat/Copolymer davon, Polycarbonate oder ein Derivat/Copolymer davon, Polyacetale oder ein Derivat/Copolymer davon, Polysulfone oder ein Derivat/Copolymer davon, Polysulfide wie Polyphenylensulfid oder ein Derivat/Copolymer davon, Vinylpolymere wie Polyvinylchlorid, Polyvinylidenchlorid oder Polyvinylpyrrolidon oder ein Derivat/Copolymer davon, Polymethylmethacrylat oder ein Derivat/Copolymer davon, Polystyrol oder ein Derivat/Copolymer davon, Polyvinylalkohol oder ein Derivat/Copolymer davon und Styrol-Butadien-Blockcopolymere oder ein Derivat/Copolymer davon usw.

Auch die Mischung mehrerer flexibler Thermoplaste mit den erfindungsgemäßen steifkettigen substituierten Polyheterocyclen ist möglich.

Die erfindungsgemäßen Mischungen können übliche Zusätze wie fließ- und Entformungsmittel, Füll- und Verstärkungsmittel wie Talkum, Kreide und Glasfasern, organische Fasern, Pigmente wie Titandioxid und Ruß, Brandschutzmittel wie Halogenverbindungen, Antimontrioxid und Stabilisatoren wie niedermolekulare Phosphite usw. enthalten.

Es können, bezogen auf die Mischung 0,001 bis 400 Gew.-% übliche Zusätze beigegeben werden.

Die erfindungsgemäßen Mischungen können zur Herstellung geformter Körper, Fasern, Filamenten und Folien verwendet werden.

## Beispiele

### Beispiel 1

In einen 250 ml Dreihalskolben mit Gasein- und -auslaß und Rührer wurden folgende Substanzen eingewogen:

17,16 g (0,04 Mol) 1,2,4,5-Tetra(trimethylsilyl)diaminohydrochinon,
16,53 g (0,04 Mol) p-(Isopropylphenyl)phenoxyterephthalsäuredichlorid,
80 ml Marlotherm S

Unter Stickstoffbeschleierung und unter Rühren wurde das Reaktionsgemisch langsam auf 350 °C erhitzt. Das entstehende Trimethylchlorsilan bzw. Hexamethyldisiloxan wurde dabei mit einem schwachen Stickstoffstrom abgetrieben. Anschließend wurde noch 3 h weitergerührt. Nach dem Abkühlen wurde das Produkt abfiltriert, mit Aceton und Dioxan gewaschen und in einem Gemisch aus Methansulfonsäure/Methylenchlorid gelöst. Nach dem Ausfällen in Methanol wurde das Produkt bei 120 °C im Vakuum getrocknet.

Beispiel 2

In einem 500 ml Dreihalskolben mit Gasein- und -auslaß und Rührer wurden folgende Substanzen eingewogen:
17,16 g (0,04 Mol) 1,2,4,5-Tetra(trimethylsilyl)diaminohydrochinon
15,49 g (0,04 Mol) p-(Phenoxy)-phenoxyterephthalsäuredichlorid
200 ml N-Methylpyrolidon

Unter Stickstoffbeschleierung und unter Rühren wurde eine konzentrierte, gekühlte Lösung des p-(Phenoxy)phenoxyterephthalsäuredichlorids zu der Lösung des 1,2,4,5-Tetra(trimethylsilyl)-diaminohydrochinons in N-Methylpyrolidon gegeben. Bei -15° C wurde die Lösung 8 h gerührt und anschließend weitere 72 h bei Raumtemperatur. Die resultierende Lösung wurde in 2 l Methanol, das 100 ml 1 n Salzsäure enthielt, gegossen. Das Produkt wurde abfiltriert und mit Methanol und Dioxan gewaschen. Nach dem Trocknen wurde das Produkt in Marlotherm S suspendiert und durch Erhitzen auf 350° C innerhalb von 3 h zum Polybisbenzoxazol cyclisiert.

Beispiel 3

In einen 250 ml Dreihalskolben mit Gasein- und -auslaß und Rührer wurden folgende Substanzen eingewogen:
17,16 g (0,04 Mol) 1,2,4,5-Tetra(trimethylsilyl)-diaminohydrochinon
15,49 g (0,04 Mol) p-(Phenoxy)phenoxyterephthalsäuredichlorid
80 ml Marlotherm S

Unter Stickstoffbeschleierung und unter Rühren wurde das Reaktionsgemisch langsam auf 350° C erhitzt. Das entstehende Trimethylchlorsilan bzw. Hexamethyldisiloxan wurde dabei mit einem schwachen Stickstoffstrom abgetrieben. Anschließend wurden noch 3 h weitergerührt. Nach dem Abkühlen wurde das produkt abfiltriert, mit Aceton und Dioxan gewaschen und in einem Gemisch aus Methansulfonsäure/Methylenchlorid gelöst. Nach dem Ausfällen in Methanol wurde das Produkt bei 120° C im Vakuum getrocknet.

Beispiel 4

In einen 250 ml Dreihalskolben mit Gasein- und -auslaß und Rührer wurden folgende Substanzen eingewogen:
17,16 g (0,04 Mol) 1,2,4,5-Tetra(trimethylsilyl)-diaminohydrochinon
6,58 g (0,02 Mol) p-(Chlorphenoxy)terephthalsäuredichlorid
7,42 g (0,02 Mol) p-(Phenyl)phenoxyterephthalsäuredichlorid
80 ml Marlotherm S

Unter Stickstoffbeschleierung und unter Rühren wurde das Reaktionsgemisch langsam auf 350° C erhitzt. Das entstehende Trimethylchlorsilan bzw. Hexamethyldisiloxan wurde dabei mit einem schwachen Stickstoffstrom abgetrieben. Anschließend wurde noch 3 h weitergerührt. Nach dem Abkühlen wurde das Produkt abfiltriert, mit Aceton und Dioxan gewaschen und in einem Gemisch aus Methansulfonsäure/Methylenchlorid gelöst. Nach dem Ausfällen in Methanol wurde das Produkt bei 120° C im Vakuum getrocknet.

Beispiel 5

In einen 250 ml Dreihalskolben mit Gasein- und -auslaß und Rührer wurden folgende Substanzen eingewogen:
25,73 g (0,06 Mol) 1,2,4,5-Tetra(trimethylsilyl)-diaminohydrochinon
8,27 g (0,02 Mol) p-(Isopropylphenyl)phenoxyterephthalsäuredichlorid
7,42 g (0,02 Mol) p-(Phenyl)phenoxyterephthalsäuredichlorid
7,48 g (0,02 Mol) p-Bromphenoxyterephthalsäuredichlorid
120 ml Marlotherm S

Unter Stickstoffbeschleierung und unter Rühren wurde das Reaktionsgemisch langsam auf 350° C erhitzt. Das entstehende Trimethylchlorsilan bzw. Hexamethyldisiloxan wurde dabei mit einem schwachen Stickstoffstrom abgetrieben. Anschließend wurde noch 3 h weitergerührt. Nach dem Abkühlen wurde das Produkt abfiltriert, mit Aceton und Dioxan gewaschen und in einem Gemisch aus Methansulfonsäure/Methylenchlorid gelöst. Nach dem Ausfällen in Methanol wurde das Produkt bei 120° C

im Vakuum getrocknet.

Beispiel 6

In einen 250 ml Dreihalskolben mit Gasein- und -auslaß und Rührer wurden folgende Substanzen eingewogen:

17,16 g (0,04 Mol) 1,2,4,5-Tetra(trimethylsilyl)-diaminohydrochinon

19,10 g (0,04 Mol) 2,5-Di-(3-phenylpropoxy)terephthalsäuredichlorid

120 ml Marlotherm S

Unter Stickstoffbeschleierung und unter Rühren wurde das Reaktionsgemisch langsam auf 350 °C erhitzt. Das entstehende Trimethylchlorsilan bzw. Hexamethyldisiloxan wurde dabei mit einem schwachen Stickstoffstrom abgetrieben. Anschließend wurde noch 3 h weitergerührt. Nach dem Abkühlen wurde das Produkt abfiltriert, mit Aceton und Dioxan gewaschen und in einem Gemisch aus Methansulfonsäure/Methylenchlorid gelöst. Nach dem Ausfällen in Methanol wurde das Produkt bei 120 °C im Vakuum getrocknet.

Beispiel 7

In einen 250 ml Dreihalskolben mit Gasein- und -auslaß und Rührer wurden folgende Substanzen eingewogen:

18,44 g (0,04 Mol) 1,2,4,5-Tetra(trimethylsilyl)-1,4-dimercapto-2,5-diaminobenzol

16,53 g (0,04 Mol) p-(Isopropylphenyl)phenoxyterephthalsäuredichlorid

120 ml Marlotherm S

Unter Stickstoffbeschleierung und unter Rühren wurde das Reaktionsgemisch langsam auf 350 °C erhitzt. Das entstehende Trimethylchlorsilan bzw. Hexamethyldisiloxan wurde dabei mit einem schwachen Stickstoffstrom abgetrieben. Anschließend wurde noch 3 h weitergerührt. Nach dem Abkühlen wurde das Produkt abfiltriert, mit Aceton und Dioxan gewaschen und in einem Gemisch aus Methansulfonsäure/Methylenchlorid gelöst. Nach dem Ausfällen in Methanol wurde das Produkt bei 120 °C im Vakuum getrocknet.

Ausbeute und Eigenschaften der substituierten Polybisbenzoxazole der Beispiele 1 bis 7

| Beispiel | Ausbeute (%) | $\eta_{inh}$ [1)] (dl/g) | Summenformel (Molgew.) | | Elementaranalyse C | H | N |
|---|---|---|---|---|---|---|---|
| 1 | 97 | 1,18 | $C_{29}H_{20}N_2O_3$ | ber.: | 78,36 | 4,53 | 6,30 |
| | | | (444.49) | gef.: | 77,05 | 4,54 | 6,10 |
| 2 | 89 | 0,88 | $C_{26}H_{14}N_2O_4$ | ber.: | 74,64 | 3,37 | 6,70 |
| | | | (418.41) | gef.: | 74,76 | 3,70 | 6,24 |
| 3 | 96 | 0,95 | $C_{26}H_{14}N_2O_4$ | ber.: | 74,64 | 3,37 | 6,70 |
| | | | (418.41) | gef.: | 74,57 | 3,45 | 6,55 |
| 4 | 92 | 0,94 | $C_{46}H_{23}ClN_4O_6$ | ber.: | 72,40 | 3,04 | 7,34 |
| | | | (763.16) | gef.: | 71,25 | 3,27 | 6,93 |
| 5 | 90 | 0,96 | $C_{75}H_{43}BrN_6O_9$ | ber.: | 71,94 | 3,46 | 6,71 |
| | | | (1252.11) | gef.: | 71,40 | 3,56 | 6,79 |
| 6 | 85 | 1,20 | $C_{32}H_{26}N_2O_4$ | ber.: | 76,48 | 5,21 | 5,57 |
| | | | (502.57) | gef.: | 75,19 | 5,21 | 5,60 |
| 7 | 89 | 1,78 | $C_{29}H_{20}N_2OS_2$ | ber.: | 73,08 | 4,23 | 5,88 |
| | | | (476.62) | gef.: | 72,71 | 4,45 | 6,10 |

1) gemessen in Methansulfonsäure/methylenchlorid (1:4 Volumenteile) bei einer Konzentration von 2 g/l und T = 25°C

## Ansprüche

1. Substituierte Polyheterocyclen mit wiederkehrenden Einheiten der Formel (I) und oder (II)

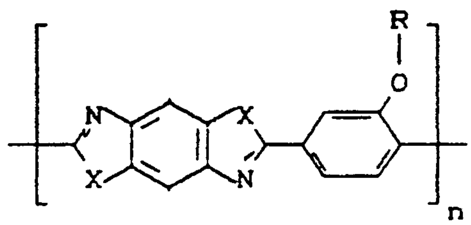

(I),

und/oder

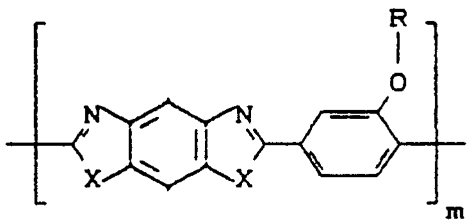

(II),

worin

R einen Arylrest mit 6 bis 18 C-Atomen, einen p-Alkylphenylrest mit 1 bis 15 aliphatischen C-Atomen, einen Phenylalkylenrest mit 6 bis 18 aromatischen C-Atomen und 1 bis 15 aliphatischen C-Atomen, einen p-Halogenphenylrest, einen p-Aryloxyphenylrest mit 12 bis 24 C-Atomen, einen p-Alkoxyphenylrest mit 7 bis 18 aliphatischen C-Atomen oder einen Indanylrest, der durch 1 bis 8 aliphatische Gruppen oder Halogenatome substituiert sein kann, wobei R an jedem Ring unabhängig gleich oder verschieden sein kann, bedeutet,

X für ein Sauerstoff-, ein Schwefelatom oder N-H steht,
und

n,m unabhängig voneinander eine ganze Zahl von 3 bis 1000 bedeuten.

2. Mischungen der substituierten Polyheterocyclen nach Anspruch 1 mit anderen Polymeren im Verhältnis von substituierten Polyheterocyclen zu Matrixpolymer 0,01 bis 0,6; 0,99 bis 0,40.

3. Mischungen nach Anspruch 1, mit anderen Polymeren im Verhältnis 0,05 bis 0,40:0,95 bis 0,60.

4. Mischungen nach Anspruch 1, mit anderen Polymeren im Verhältnis 0,05 bis 0,20:0,95 bis 0,80.

5. Verwendung der Mischungen nach den Ansprüchen 1 und 2 zur Herstellung von geformten Körpern, Folien, Fasern und Filamenten.

Europäisches Patentamt

# EUROPÄISCHER RECHERCHENBERICHT

Nummer der Anmeldung

**EP 90 12 2584**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 236 737 (RESEARCH DEVELOPMENT CORPORATION OF JAPAN)<br>* Ansprüche 1, 2, 4 * | 1-5 | C 08 G 73/06<br>C 08 G 73/18<br>C 08 G 73/22 |
| A | EP-A-0 265 921 (HOECHST CELANESE CORPORATION)<br>* Ansprüche 1, 9, 10 * | 1-5 | |
| A | US-A-4 709 006 (TSAI ET AL.)<br>* Ansprüche 1, 2 * | 1-5 | |
| A | POLYMER JOURNAL. vol. 18, no. 2, 1986, TOKYO JP Seiten 117 - 122; UEDA et al.: "SYNTHESIS OF POLYBENZOTHIAZOLES BY DIRECT POLYCONDENSATION OF DICARBOXYLIC ACIDS ..."<br>* das ganze Dokument * | 1-5 | |

| RECHERCHIERTE SACHGEBIETE (Int. Cl.5) |
|---|
| C 08 G |

Der vorliegende Recherchenbericht wurde für alle Patentansprüche erstellt

| Recherchenort | Abschlußdatum der Recherche | Prüfer |
|---|---|---|
| Den Haag | 08 März 91 | GLANDDIER A. |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument